# EUROPEAN PATENT APPLICATION

(11) **EP 2 413 444 A2**
(43) Date of publication of application: **01.02.2012**
(21) Application number: 11168308.2
(22) Date of filing: 31.05.2011
(51) Int. Cl.: H02B 1/28

(54) **Power supply unit for swimming pools**

(30) Priority: 26.07.2010 US 843624
(71) Applicant: Rice Field Limited, Kwun Tong Hong Kong (CN)
(72) Inventor: Hui, Wing-kin, Kwun Tong Hong Kong (CN)
(74) Representative: Chaillot, Geneviève

(57) **Abstract**

Disclosed herein is an electrical power head for supplying electrical power to electrical appliances for an above ground pool. The power head includes at least one electrical outlet. The power head has an electrical housing located proximate the pool. The housing has access to an electrical power source. The power source defines ordinary domestic power. The housing includes an electrical circuit having structure for connecting the power head to the domestic A/C electricity, a step-down transformer for converting domestic A/C into electricity into that usable by a connectable pool appliance and a DAC for converting a digital signal to an analog signal, decision means for determining whether the usable electricity is D/C or A/C and at least one electrical outlet for connection to an electrical pool appliance.

## Description

### Field of the Invention

This invention generally relates to the field of automated pool products. More particularly, this invention relates to above ground pools having a power head in close proximity to the pool capable of connection with electrical pool appliances.

### Background of the Invention

In order to properly operate and maintain a pool and its contents, it is necessary to have a variety of electrical appliances. For example, a pool cleaner, which sweeps and cleans the pool water requires electrical power. Additional electrical appliances, such as salt chlorinator generators and mineral sanitizing devices are used to maintain the proper pH levels in the pool.

Other electrical appliances are used to enhance the usability and the beauty of the swimming pool. For example, pool lights used to illuminate the pool at night to facilitate night swimming are powered by electricity. Additionally, a color wheel may be used as decoration to give the pool the special effects desired by the pool owner. Such a color wheel is likewise an electrical appliance.

Typically, the user now runs electrical lines or cords from the domestic residence to the site of the pool. This naturally would mean that electrical cords are spread out all over the area adjacent the pool. Naturally this is not a desirable condition. This condition is exacerbated when there are more than single cords from the domestic residence to more than one electrical appliance. The likelihood of someone being injured by tripping on the cords increases exponentially. Obviously this creates a safety hazard and liability issues for the pool owner.

In addition to the likelihood of injury, the beauty and general attractiveness of the user's yard is dramatically and negatively affected by the messiness of having one or more cords laying around. It is quite clearly an unsightly and undesirable condition.

Additionally, each of the cords must be placed in storage after usage. First, the user must lay out the cord and then the user connects the cord to the electrical appliance desired to be used. The cords lay on the ground during usage and then upon completion of device usage, they must be disconnected from the electrical appliance and then stored.

Cleary having to do each of these steps, each and every time an electrical appliance is used becomes tiresome, if not downright tedious. There are certainly better ways for a pool owner to spend his/her time, for example enjoying his/her pool.

What is needed is a structure that allows the above ground pool user the ability to easily and efficiently connect one or more electrical appliances simultaneously at the site of the pool eliminating the need for repeated connection and disconnection of electrical power lines from the domestic residence.

### Summary of the Invention

A primary object of this invention is to create a user friendly environment for an outside above ground pool. By providing an outlet receptacle at a location proximate the sites of the above ground pool, no line cords need to be run from the domestic facility. Additionally, by leaving the above ground pool premises free from a tangle of cords and pool appliances, the user can enjoy the aesthetic aspects of his pool more freely. Additionally, since the line cords do not need to be connected, disconnected, stored and then connected again, there is a considerable timesaving using the power head of the present invention. Hence the user gets to enjoy the pool more and pay less attention to electrical power cords.

Thus, It is an object of this invention is to provide a structure, proximate the pool, for facilitating easy electrical connection of electrical appliances associated with pool maintenance and use.

It is another object of this invention to provide a power head, which is configurable to a variety of different settings for different pool appliances.

It s an additional object of this invention to provide such a power head, which can accommodate the connection of more than one appliance simultaneously.

In accordance with the above objects of the invention as well as those discussed below as well as the advantages of the invention, one exemplary embodiment in accordance with the invention includes an electrical power head for supplying electrical power to electrical appliance(s) for an above ground pool, the power head comprising: an electrical housing located proximate the pool, the electrical housing having a power source, the power source defining an ordinary domestic power (a/c power) through an electrical outlet; and the housing having an electrical outlet for connection with a pool appliance.

In another exemplary embodiment of the power head includes an electrical circuit comprising means for connecting the power head to the domestic A/C electricity, a step-down transformer means for converting domestic A/C electricity into that usable by a connectable pool appliance, DAC means for converting a digital signal to an analog signal and at least one electrical outlet for connection to an electrical pool appliance.

In other exemplary embodiments, there are pluralities of outlets and each outlet is configured independently for adaptation to the particular needs of the pool appliance.

It is an advantage of the power head in accordance with this invention to provide a permanent and convenient source of electrical power proximate to the above ground pool.

It is an additional advantage of the device of the instant invention to provide a such a device which allows the user to focus his energies into more pleasurable activities such as using his pool rather than laying out line cords and putting them away.

### Brief Description of the Drawing

For a further understanding of the objects and advantages of the present invention, reference should be made to the following detailed description, taken in conjunction with the accompanying drawing, in which like parts are given like reference numerals and wherein:
Fig. 1 is a perspective view of the power head for an above ground pool, in accordance with this invention, located proximate the pool.
Fig. 2 is a schematic flow diagram illustrating the basic flow of the power head of Fig. 1.
Fig. 3 is a perspective view of an alternative power head for an above ground pool, in accordance with this invention, having more than one outlet for simultaneous operation of various electrical appliances.
Fig. 4 is schematic diagram illustrating an alternate embodiment of the circuit for the power head in accordance with the invention.
Fig. 5 is an additional schematic diagram illustrating another alternate embodiment of the circuit for the power head in accordance with the invention.

### Detailed Description of the Invention

In order to appreciate the invention herein, one must appreciate the need in the art as set forth in the Background. Most importantly, the structure herein for resolving the long felt need to eliminate messy and unsafe electrical cords and provide means for electrical connection proximate the above ground pool.

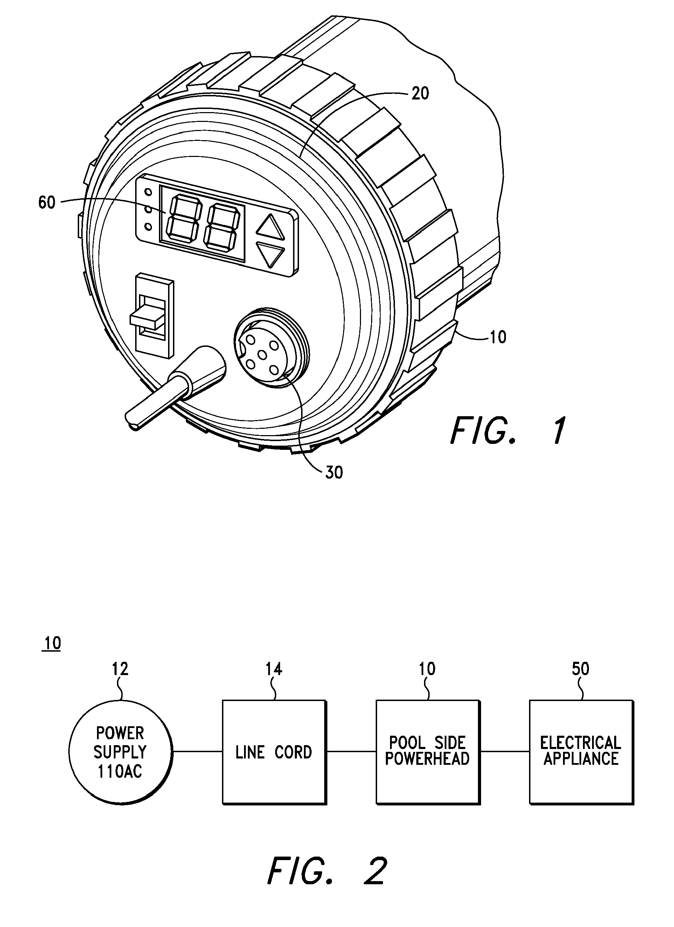

With particular reference to Fig. 1, there is shown a power head 10 in accordance with the invention. Pursuant to Fig. 2, the general circuit includes a power supply 12, a line cord 14 for transmission of the power and the power head 10.

The power supply comprises the domestic power. Typically, power is that of ordinary alternating current (a/c), 120 volt. A permanent electrical power cord or line cord 14 is run from the domestic facility served by the pool to the power head 10. Typically only one cord is needed, however, multiple line cords 14 can be run to the power head.

In a permanent environment, the line cord(s) 14 are run underground, buried and decking or a patio is typically placed over the line cord(s) 14. The line cord(s) 14 are then only run to the pool one time and then permanently connected to the power head 10.

The power head 10 has a face 20 having at least one outlet 30. While the outlet 30 is configured in a certain manner. For example, the outlet can be configured as an ordinary electrical plug. Other and special configurations are also possible.

Additionally, the face 20 includes various other switches and gauges consistent with the ability to supply power at the proximate location of the pool. For example, the switch 40 is used to turn on the circuit having the outlet, thereby power an electrical appliance 50 attached to the outlet 30. A gauge 60 is used to read power output or other functions well known in the art.

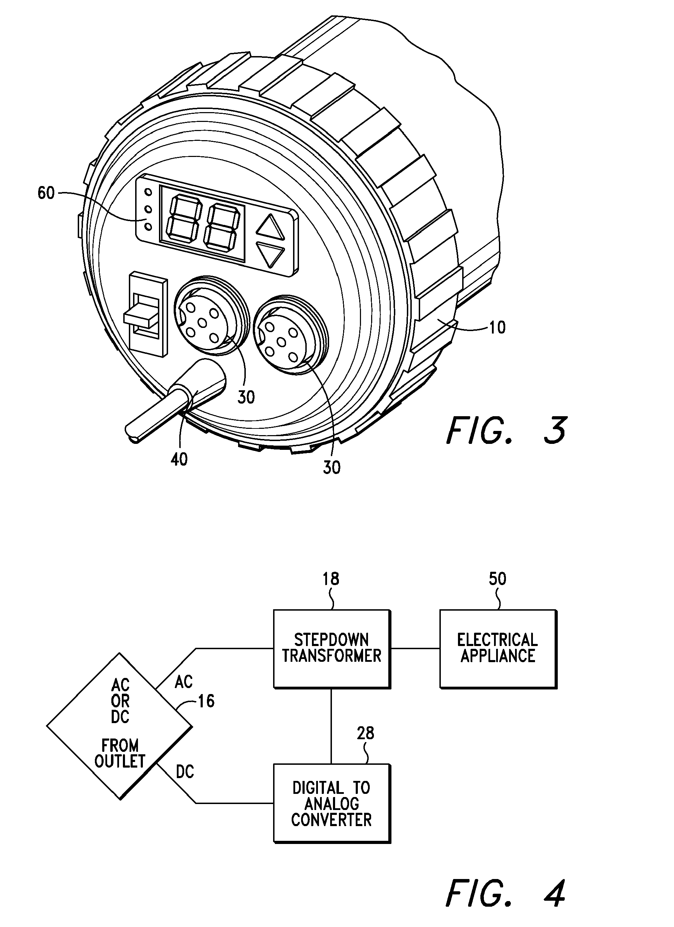

In another configuration, as shown in Fig. 3, the power head 10 has multiple outlets 30. As illustrated, the power head of Fig. 3 includes two outlets 30. As noted above each of these outlets can be configured to various types of outlets. Additionally, the outlets may, in a preferred embodiment, be configured independently. One outlet may be configured for A/C while another may be configured for D/C and even configured to be interchangeable.

Thus, within the spirit and scope of this invention, the invention of a power head, can be configured in a variety of different ways with a variety of different outlets having different voltages, different currents and different adaptations. Each of these is independent from the other and various combinations are possible to deliver the function required by the user. Flexibility and customization are clearly advantages within the spirit and scope of the invention.

Illustrated in Fig. 4 is the circuit for facilitating the various configurations and possible customizations. The circuit includes a decision module 16. The decision module 16 chooses whether to send an a/c signal to the stepdown transformer 18 or a d/c signal to the digital to analog converter (DAC) 28. The signal is then sent to the stepdown transformer 18. The stepdown transformer 18 is set to provide the appropriate signal to the electrical appliance 50.

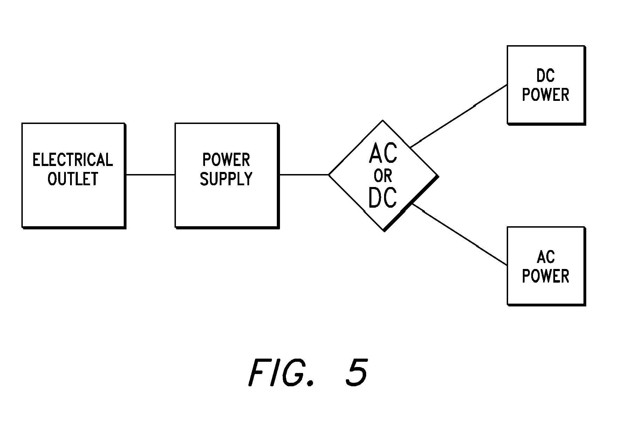

Illustrated in Fig. 5 is another exemplary embodiment of the circuit for the power head 10 in accordance with the invention. In this embodiment, the power comes, initially from the domestic wall outlet 65. The circuit includes a power supply 75, which supplies either or both a/c or d/c power. A decision module 85 directs the signal to either an a/c or d/c signal and the signal is then sent to the appropriate outlet either ac or dc.

While the foregoing detailed description has described several embodiments of the power head for an above ground pool in accordance with this invention, it is to be understood that the above description is illustrative only and not limiting of the disclosed invention. Thus, the invention is to be limited only by the claims as set forth below.

## Claims

1. An electrical power head for supplying electrical power to an electrical appliance (50) for an above ground pool, the power head (10), comprising:
an electrical housing located proximate the pool, the electrical housing having a power source (12), the power source (12) being an ordinary domestic power through an electrical outlet (30); and
the housing having an electrical outlet (30) for connection with a pool appliance (50).

2. The power head as set forth in Claim 1, wherein the housing includes means for converting domestic A/C electrical power into the electrical power needed by the particular pool appliance (50) connected to the outlet (30).

3. The power head as set forth in Claim 2, wherein the housing includes means for converting domestic A/C electrical power, the converting means having an electrical circuit step-down transformer means (18) for converting domestic A/C electricity into that usable by a connectable pool appliance (50).

4. The power head as set forth in Claim 1, wherein the power head (10) includes an electrical circuit comprises means (14) for connecting the power head (10) to the domestic A/C electricity, step-down transformer means (18) for converting domestic A/C electricity into that usable by a connectable pool appliance (50) and outlet (30).

5. The power head as set forth in Claim 1, wherein the power head (10) includes an electrical circuit comprising means for connecting (14) the power head (10) to the domestic A/C electricity, a step-down transformer means (18) for converting domestic A/C electricity into that usable by a connectable pool appliance, DAC means (28) for converting a digital signal to an analog signal and at least one electrical outlet for connection to an electrical pool appliance (50).

6. The power head as set forth in Claim 1, wherein the power head (10) includes an electrical circuit comprising means for connecting the power head (10) to the domestic A/C electricity, a step-down transformer means (18) for converting domestic A/C into electricity into that usable by a connectable pool appliance (50) and outlet DAC means (28) for converting a digital signal to an analog signal, decision means (16) for determining whether the usable electricity is D/C or A/C and at least one electrical outlet for connection to an electrical pool appliance (50).

7. The power head as set forth in Claim 6, wherein the decision means (16) also includes means for determining the correct power level as well whether the power should be analog or digital.

8. The power head as set forth in Claim 6, wherein the power head (10) has more than one outlet (30) for connection with more than one pool appliance (50).

9. The power head as set forth in Claim 6, wherein the power head (10) has two outlets (30) for connection with simultaneously connection to more than one pool appliance (50).
